# EUROPÄISCHE PATENTSCHRIFT

(11) **EP 2 312 913 B1**
(45) Veröffentlichungstag und Bekanntmachung des Hinweises auf die Patenterteilung: **13.08.2014**
(21) Anmeldenummer: 10188324.7
(22) Anmeldetag: 12.10.2006
(51) Int. Cl.: H05B 37/02

(54) **Steuerungssystem für mehrere verteilt angeordnete Verbraucher, insbesondere für Lampenbetriebsgeräte, sowie Verfahren zur Inbetriebnahme**
Control system for several separately arranged consumers, especially lamp operating devices, and start-up method
Système de commande conçu pour plusieurs récepteurs séparés, en particulier des dispositifs fonctionnant avec des lampes, et procédé de mise en marche de celui-ci

(30) Priorität: 30.11.2005 DE 102005057068
(43) Veröffentlichungstag der Anmeldung: 20.04.2011
(62) Teilanmeldung aus: 06806234.8
(73) Patentinhaber: Zumtobel Lighting GmbH, 6850 Dornbirn (AT)
(72) Erfinder: Fenkart, Karl-Heinz, 6845, Hohenems (AT); Klocker, Bernhard, 6850, Dornbirn (AT)
(74) Vertreter: Thun, Clemens

(56) Entgegenhaltungen:
- EP-A- 0 433 527
- EP-A- 0 766 881
- WO-A-00/43966
- DE-A1-102004 039 677
- FR-A- 2 743 866
- US-A1- 2003 227 267
- US-B1- 6 546 435

## Beschreibung

Die vorliegende Erfindung betrifft ein Steuerungssystem zum Betreiben mehrerer verteilt angeordneter Verbraucher, insbesondere zum Betreiben von verteilt angeordneten Lampenbetriebsgeräten. Des Weiteren betrifft die vorliegende Erfindung ein Verfahren zur Inbetriebnahme eines derartigen Steuerungssystems.

Beleuchtungssysteme moderner Bauart, welche insbesondere zur Beleuchtung größerer Gebäude oder Anlagen vorgesehen sind, bieten in der Regel die Option, die in unterschiedlichen Bereichen angeordneten Leuchten nicht nur über die in den jeweiligen Bereichen angeordneten Schalter oder Dimmer ein- oder auszuschalten bzw. in ihrer Helligkeit einzustellen. Stattdessen besteht auch die Möglichkeit, die Leuchten von einer zentralen Steuereinrichtung aus fernzusteuern. Hierdurch wird eine komfortable Beleuchtungssteuerung zur Ausleuchtung größerer Gebäude oder Komplexe erzielt. Derartige Beleuchtungssysteme weisen deshalb üblicherweise einen oder mehrere Befehlsgeber auf, welche die dezentralen in unterschiedlichen Bereichen angeordneten und an ein Stromversorgungsnetz angeschlossenen Lampenbetriebsgeräte über Befehle ansprechen und steuern können. Oftmals ist auch eine Kommunikation von den Lampenbetriebsgeräten zu dem Befehlsgeber hin vorgesehen, um bspw. fehlerhafte Betriebszustände zurückzumelden. Auf diese Weise wird nicht nur eine komfortable Beleuchtungssteuerung sondern auch eine zuverlässige Überwachung des Zustands des Beleuchtungssystem ermöglicht.

Die Ansteuerung der einzelnen Lampenbetriebsgeräte erfolgt über eine ihnen individuell zugeordnete Adresse, über die sie von der zentralen Steuereinheit angesprochen werden können. Vorzugsweise werden dabei den Lampenbetriebsgeräten sog. Betriebsadressen zugewiesen, welche unter anderem auch die Anordnung der Lichtquellen in den unterschiedlichen Bereichen des auszuleuchtenden Gebäudes berücksichtigen. Hierbei besteht ergänzend auch die Möglichkeit, die in den verschiedenen Räumen angeordneten Lichtquellen in Gruppen zusammenzufassen, welche gemeinsam von der zentralen Steuereinheit angesprochen werden können.

Steuerungssysteme für Lampenbetriebsgeräte, welche eine individuelle Ansteuerung der Geräte ermöglichen, arbeiten heutzutage oftmals gemäß dem sog. DALI (Digital Adressable Lighting Interface) Standard. Hierbei handelt es sich um eine von der Beleuchtungsindustrie entwickelte Schnittstelle zur Übermittlung von digitalen Steuerbefehlen zwischen einer zentralen Steuereinheit und verteilt angeordneten Verbrauchern. Über einen sog. DALI-Bus können dann bis zu 64 Leuchten an einen Befehlsgeber angeschlossen werden, welche Leuchten individuell adressierbar sind. Da die entsprechenden Lampenbetriebsgeräte bei ihrer Herstellung und Montage in dem Beleuchtungssystem noch keine Betriebsadresse aufweisen, muss diese im Rahmen einer Initialisierungsprozedur vergeben werden, die gemäß dem DALI-Standard wie nachfolgend erläutert durchzuführen ist.

Nach Montage aller Lampenbetriebsgeräte ohne Ansehung ihrer räumlichen Anordnung werden die Betriebsgeräte der einzelnen Leuchten zunächst an den DALI-Bus, also die Steuerleitung angeschlossen. Die daraufhin erfolgende Versorgung der Lampenbetriebsgeräte mit Spannung bewirkt, dass jedes Lampenbetriebsgerät für sich eine individuelle Zufallsadresse generiert. Von dem zentralen Befehlsgeber aus wird dann der Befehl erteilt, dass sich die Lampenbetriebsgeräte mit ihrer Zufallsadresse melden, wodurch intern bei dem Befehlsgeber eine Liste sämtlicher Geräte angelegt wird, welche auch die Information enthält, über welche Zufallsadressen die Geräte jeweils kontaktierbar sind.

Da diese Zufallsadresse allerdings noch nicht die räumliche Anordnung des Lampenbetriebsgeräts berücksichtigt, wird in einem darauf folgenden Schritt den Geräten dann jeweils die für den späteren Betrieb vorgesehene Betriebsadresse zugewiesen. Dies erfolgt dadurch, dass der zentrale Befehlsgeber zunächst eine erste Zufallsadresse aufruft, was zur Folge hat, dass sich die entsprechende Leuchte identifiziert, also bspw. aufleuchtet. Nunmehr muss eine Person feststellen, in welchem Raum sich diese Leuchte befindet. Sobald die Position festgestellt wurde, erfolgt eine entsprechende Rückmeldung an die Zentrale. Eine weitere Person gibt dann den Platz und die Gruppe der sich meldenden Leuchte in das Steuergerät ein, was zur Folge hat, dass dieser Leuchte dann eine geeignete Betriebsadresse zugewiesen wird. Nacheinander werden auf diese Weise sämtliche Zufallsadressen abgehandelt, bis sämtlichen Leuchten eine Betriebsadresse zugewiesen wurde. Diese wird jeweils in einem entsprechenden Speicher des Lampenbetriebsgeräts abgelegt.

Vergleichbare Vorgehensweisen zum Zuweisen von Betriebsadressen für Lampenbetriebsgeräte in größeren Beleuchtungssystemen sind aus der EP 0 766 881 A1 oder der EP 0 433 527 A1 bekannt. Alle diese bekannten Verfahren beruhen auf dem Prinzip, dass die Lampenbetriebsgeräte zunächst anhand einer die Position nicht berücksichtigenden Ursprungs- oder Zufallsadresse zur Identifizierung aufgerufen werden, wobei nach Feststellen der eigentlichen Position der Leuchte dann dieser Leuchte eine neue Betriebsadresse zugewiesen wird.

Diese bekannten Verfahren zum Initialisieren größerer Beleuchtungssysteme sind zwar insofern problematisch, als das Auffinden einer sich gerade identifizierenden Leuchte mitunter sehr aufwendig sein kann, allerdings kommen diese Verfahren auch heute nach wie vor zum Einsatz. Sie besitzen darüber hinaus allerdings auch den Nachteil, dass die reguläre Betriebsadresse, die im Rahmen des Initialisierungsverfahrens von dem zentralen Befehlsgeber verteilt wurde, jeweils in dem betreffenden Lampenbetriebsgerät selbst abgespeichert wird. Wenn nun ein Austausch der entsprechenden Leuchte mit dem Lampenbetriebsgerät erforderlich ist bzw. das Lampenbetriebsgerät allein ausgetauscht werden soll, so geht die Information über die eigentliche Betriebsadresse verloren. Dies ist bei einem einzigen auszutauschenden Lampenbetriebsgerät kein Problem, da dieses von der Zentrale aus in verhältnismäßig einfacher Weise identifiziert und mit einer neuen - nämlich der alten regulären - Betriebsadresse versorgt werden kann. Sollten allerdings mehrere Lampenbetriebsgeräte gleichzeitig ausgewechselt werden, was bei Wartungsarbeiten in größeren Beleuchtungssystemen durchaus der Fall sein kann, so besteht eine Unsicherheit. Es ist dann von der Zentrale aus nicht mehr festzustellen, welches ausgewechselte Lampenbetriebsgerät welche reguläre Betriebsadresse haben sollte. In diesem Fall muss in der Regel die gesamte Anlage neu programmiert werden, um sämtlichen Geräten wieder geeignete Betriebsadressen zuzuweisen.

Aus der WO 00/43966 A1 ist ein Steuerungssystem für verteilt angeordnete Verbraucher bekannt, bei dem die für einen Verbraucher vorgesehene Adresse mit Hilfe von DIL-Schaltern unmittelbar dem Verbraucher zugewiesen werden kann. Eine die Adresse auf diese Weise speichernde Einheit kann trennbar von dem eigentlichen Verbraucher ausgebildet werden.

Ferner beschreibt die FR 2 743 866 A Notleuchten, welche über ein trennbares Speichermodul mit einer Steuerleitung verbunden sind. In dem Speichermodul ist wiederum eine Adresse abgelegt, über welche die Leuchte kontaktiert werden kann.

Der vorliegenden Erfindung liegt die Aufgabe zugrunde, den oben beschriebenen Nachteilen entgegen zu wirken. Insbesondere soll ein Steuerungssystem für mehrere verteilt angeordnete Verbraucher geschaffen werden, bei dem insbesondere nach Wartungsarbeiten die Zuweisung und Speicherung der Betriebsadressen in optimierter Weise erfolgt.

Die Aufgabe wird durch die in den unabhängigen Ansprüchen angegebene Erfindung gelöst. Vorteilhafte Weiterbildungen der Erfindung sind Gegenstand der Unteransprüche.

Die Erfindung beruht zunächst auf dem Gedanken, jedem Verbraucher ein separates Speicherteil zuzuordnen, welches zum Speichern der entsprechenden Betriebsadresse des Verbrauchers vorgesehen ist. Dieses Speicherteil, welches vorzugsweise mit dem Verbraucher über die Steuerleitung des Systems verbunden ist, speichert also zusätzlich zu dem Verbraucher die diesem zugewiesene Betriebsadresse, so dass nach einem Austausch des Verbrauchers dem neuen Gerät unmittelbar die entsprechende Adressinformation übermittelt werden kann werden kann. Das Speicherteil weist ferner Eingabeelemente zum manuellen Eingeben einer dem zugehörigen Verbraucher zugewiesenen Betriebsadresse aufweist

Gemäß der vorliegenden Erfindung wird also ein Steuerungssystem für mehrere verteilt angeordnete Verbraucher, insbesondere für Lampenbetriebsgeräte vorgeschlagen, welches mindestens einen Befehlsgeber, eine Steuerleitung, welche den Befehlsgeber mit jedem Verbraucher verbindet, sowie einer jedem Verbraucher zugeordneten und zur Kommunikation mit dem Befehlsgeber vorgesehenen Send- und Empfangseinheit aufweist, wobei jedem Verbraucher eine Betriebsadresse zugewiesen ist, welche in einem internen Speicher des Verbrauches gespeichert ist und über welche der Verbraucher durch den Befehlsgeber kontaktierbar ist. Ferner ist jedem Verbraucher ein von dem Verbraucher getrenntes oder trennbares Speicherteil zugeordnet, welches ebenfalls einen Speicher zum Speichern der Betriebsadresse des zugehörigen Verbrauchers aufweist, wobei das Speicherteil Eingabeelemente zum manuellen Eingeben einer dem zugehörigen Verbraucher zugewiesenen Betriebsadresse aufweist.

Der Vorteil der erfindungsgemäßen Lösung besteht darin, dass für den Fall, dass ein Verbraucher bzw. ein Lampenbetriebsgerät gewechselt werden muss, das davon getrennte Speicherteil an Ort und Stelle in dem System verbleibt. Wird nach dem Wechsel des Verbrauchers dieser an das Steuerungssystem angeschlossen, so tritt das Speicherteil automatisch mit dem Verbraucher in Kontakt und versorgt diesen mit der korrekten Betriebsadresse. Selbst nach dem Wechsel mehrerer Verbraucher ist dementsprechend keine Neuinstallation des Steuerungssystems mehr erforderlich, da den Verbrauchern automatisch wieder die richtigen Betriebsadressen zugewiesen werden. Hierdurch werden evtl. Wartungsarbeiten an dem Steuerungssystem deutlich vereinfacht, da nach einem Wechsel der einzelnen Geräte keine zentralisierte Neuzuweisung von Betriebsadressen erforderlich ist.

Ferner ist aufgrund der Eingabeelemente zum manuellen Eingeben der Adresse die zuvor geschilderte aufwendige Initialisierungsprozedur zum erstmaligen Vergeben der Betriebsadressen nicht mehr erforderlich. Stattdessen kann einem Verbraucher in einfacher Weise eine Betriebsadresse dadurch zugewiesen werden, dass diese in das Speicherteil manuell eingegeben wird und dann das Speicherteil eine entsprechende Information an den Verbraucher übermittelt. In diesem Fall ist es nicht mehr erforderlich, eine sich anhand ihrer provisorischen Ursprungs- oder Zufallsadresse identifiziere Leuchte aufzufinden. Stattdessen ist es lediglich erforderlich, die entsprechend programmierten Speicherteile an das Busleitungssystem bzw. die Steuerleitung anzuschließen, um diese mit dem jeweiligen Verbraucher in Kontakt treten zu lassen.

Vorteilhafte Weiterbildungen der Erfindung betreffen insbesondere die Ausgestaltung des Speicherteils.

So ist vorzugsweise vorgesehen, dass für den Fall, dass das Speicherteil mit dem jeweiligen Verbraucher über die Steuerleitung verbunden ist, das Speicherteil während des Betriebs über die Steuerleitung des Steuerungssystems mit Energie versorgt wird. Das Speicherteil arbeitet also weitestgehend leistungslos und nimmt im Vergleich zu den eigentlichen Verbrauchern des Steuerungssystems deutlich weniger Leistung auf. Dies hat zur Folge, dass das Speicherteil einer niedrigeren Belastung ausgesetzt wird und dementsprechend eine extrem hohe Lebensdauer aufweist. Das Speicherteil kann somit problemlos mehrere auszutauschende Verbraucher "überleben".

Da allerdings während der manuellen Eingabe der Betriebsadresse ein erhöhter Energieverbrauch vorliegt, ist vorzugsweise vorgesehen, dass das Speicherteil einen Anschluss zur externen Energieversorgung für den Programmiervorgang aufweist. Dieser Anschluss kann bspw. durch zumindest einen Anschluss des Speicherteils an die Steuerleitung(en) des Systems gebildet werden, wobei dann während des Programmierens dieser Anschluss mit einer externen Energieversorgungsquelle verbunden ist. Alternativ hierzu kann auch ein separater Anschluss vorgesehen sein, über den die Energieversorgung während der manuellen Eingabe der Betriebsadresse vorzugsweise induktiv erfolgt.

Vorzugsweise weist das Speicherteil ferner eine Anzeige oder ein Display zur Darstellung der einprogrammierten bzw. gespeicherten Betriebsadresse auf, wobei vorgesehen sein kann, dass die Anzeige bzw. das Display ausschließlich während der manuellen Eingabe der Betriebsadresse aktiviert ist. Auf diese Weise wird der Energieverbrauch während des späteren Betriebs deutlich reduziert.

Insgesamt wird also ein Steuerungssystem für mehrere verteilt angeordnete Verbraucher geschaffen, welches aufgrund des Einsatzes der erfindungsgemäßen Speicherteile deutlich wartungsfreundlicher ist. Insbesondere ist es nach einem Wechsel mehrerer Verbraucher nicht mehr erforderlich, diesen im Rahmen eines komplizierten Zuordnungsverfahrens neue Betriebsadressen zuzuweisen. Darüber hinaus wird eine besonders einfache Initialisierung des gesamten Systems ermöglicht.

Nachfolgend soll die Erfindung anhand der beiliegenden Zeichnung näher erläutert werden. Es zeigen;
- Fig. 1: den grundsätzlichen Aufbau eines erfindungsgemäßen Steuerungssystems für mehrere verteilt angeordnete Verbraucher;
- Fig. 2: einen Ausschnitt des in Fig. 1 dargestellten Steuerungssystems und
- Fig. 3a und 3b: Ansichten eines erfindungsgemäßen Speicherteils.

Die Erfindung soll nachfolgend anhand des Beispiels eines größeren Beleuchtungssystems erläutert werden. Anzumerken ist allerdings, dass die Verwendung der erfindungsgemäßen Speicherteile keinesfalls auf Steuerungssysteme für Lampenbetriebsgeräte bzw. Leuchten beschränkt ist. Stattdessen können entsprechende Speicherteile immer dann eingesetzt werden, wenn in größeren Steuerungssystemen Verbraucher von einer Zentrale aus individuell über eine Betriebsadresse kontaktierbar sind und sichergestellt sein soll, dass ein Verbraucher auch nach einem Auswechseln desselben automatisch wieder unter der korrekten Adresse ansprechbar ist. Beispielsweise könnten die erfindungsgemäßen Speicherteile generell bei Hausleitsystemen eingesetzt werden, die zum Fernsteurn unterschiedlichster Geräte vorgesehen Unter den Begriff Verbraucher fallen also neben Lampenbetriebsgeräten bspw. auch Jalousien, Heizungs- bzw. Klimageräte oder Überwachungseinrichtungen.

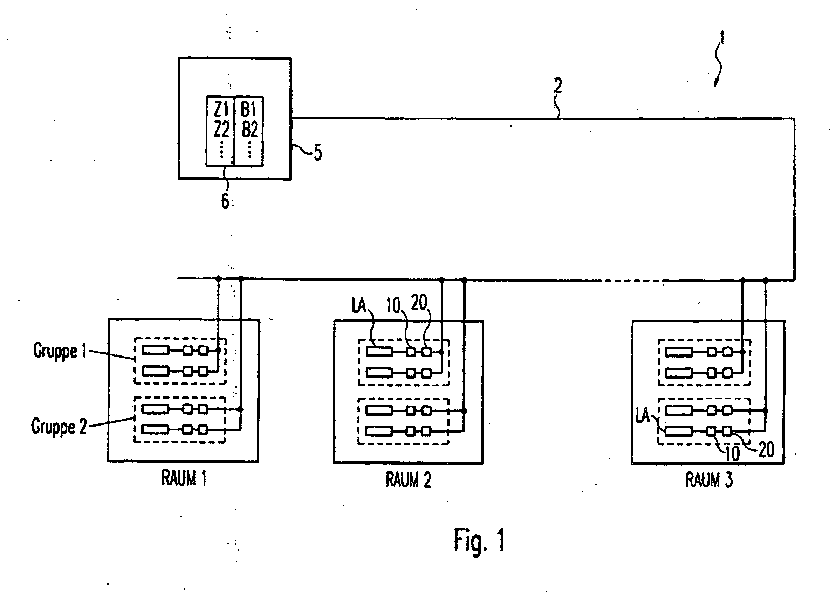

Das in Fig. 1 dargestellte und allgemein mit dem Bezugszeichen 1 versehene Beleuchtungssystem basiert auf einem mit dem Bezugszeichen 2 versehenen Busleitungssystem, welches einen zentralen Befehlsgeber 5 mit einzelnen Verbrauchern verbindet. Die Verbraucher werden im vorliegenden Fall durch Leuchten gebildet, welche einerseits ein Lampenbetriebsgerät 10 sowie andererseits eine mit dem Lampenbetriebsgerät 10 verbundene Lampe LA umfassen. Alle Lampenbetriebsgeräte 10 sind an die Busleitung 2 angeschlossen und weisen hierzu eine später noch näher beschriebene Sende- und Empfangseinheit auf, über welche ein Datenaustausch mit dem zentralen Befehlsgeber 5 ermöglicht ist. Vorzugsweise handelt es sich bei den Lampenbetriebsgeräten 10 um elektronische Vorschaltgeräte (EVGs), welche ihnen nachgeordnete Gasentladungslampen LA, insbesondere Leuchtstoffröhren betreiben.

Wie der Darstellung in Fig. 1 entnommen werden kann, sind die verschiedenen Lampenbetriebsgeräte 10 in unterschiedlichen Räumen angeordnet. Jeweils zwei Lampenbetriebsgeräte sind dabei zu einer Gruppe zusammengefasst, so dass sie ggf. durch den zentralen Befehlsgeber 5 einheitlich angesteuert werden können. Darüber hinaus soll allerdings auch die Möglichkeit bestehen, jedes einzelne Lampenbetriebsgerät 10 individuell anzusteuern. Der zentrale Befehlsgeber 5 soll also die Möglichkeit besitzen, jede Leuchte individuell ein- und auszuschalten bzw. in ihrer Helligkeit einzustellen.

Die Übermittlung der Steuerbefehle von dem zentralen Befehlsgeber 5 zu den einzelnen Leuchten hin erfolgt vorzugsweise gemäß dem sog. DALI-Standard. Es handelt sich hierbei um eine speziell von der Leuchtenindustrie entwickelte Schnittstelle zur Übermittlung digitaler Steuerbefehle, welche die Möglichkeit eröffnet, einzelne Leuchten ein- und auszuschalten sowie Dimmwertbefehle zu übermitteln, um die Helligkeit nahezu stufenlos zu regeln. Dieser DALI-Standard hat sich in letzter Zeit immer weiter durchgesetzt, da hierdurch eine komfortable ferngesteuerte Beleuchtungssteuerung realisiert werden kann. Anzumerken ist allerdings, dass die vorliegende Erfindung grundsätzlich bei jeder Art der digitalen Befehlsübermittlung eingesetzt werden kann.

Eine individuelle Ansteuerung der einzelnen Leuchten des Steuerungssystems 1 wird dadurch ermöglicht, dass jedem Lampenbetriebsgerät 10 eine Betriebsadresse zugewiesen ist. Beim DALI-Standard besteht bspw. die Möglichkeit, bis zu 64 Lampenbetriebsgeräte über die Busleitungen 2 mit einem zentralen Befehlsgeber 5 zu verbinden. Jedes Lampenbetriebsgerät 10 weist dabei eine eigene Betriebsadresse auf, welche einen Bestandteil der von dem Befehlsgeber 5 übermittelten Befehle bildet. Dementsprechend kann jedes Lampenbetriebsgerät 10 selbstständig erkennen, ob es von einem auf die Busleitung 2 gegebenen Befehl betroffen ist und diesen ausführen soll oder nicht. Ferner besteht beim DALI-Standard ergänzend dazu noch die Möglichkeit, den einzelnen Lampenbetriebsgeräten, nachdem ihnen eine individuelle Betriebsadresse zugewiesen wurde, Gruppenadressen zuzuweisen.

Da die Lampenbetriebsgeräte 10 bei der erstmaligen Montage des Beleuchtungssystems 1 noch keine Betriebsadresse aufweisen, muss diese ihnen zunächst im Rahmen einer Initialisierungsprozedur zugewiesen werden. Beim DALI-Standard ist hierfür folgende Vorgehensweise vorgesehen:
a) Nach der Inbetriebnahme des Systems generieren zunächst sämtliche Lampenbetriebsgeräte auf eine entsprechende Aufforderung des Befehlsgebers hin eine Zufallsadresse. Diese Zufallsadressen werden von sämtlichen Lampenbetriebsgeräten an den zentralen Befehlsgeber 5 übermittelt, der hieraus zunächst die niedrigste Zufallsadresse ermittelt und unter dieser Zufallsadresse das entsprechende Lampenbetriebsgerät auffordert, sich zu identifizieren.
b) Das Identifizieren des Lampenbetriebsgeräts erfolgt dadurch, dass die zugehörige Lampe in geeigneter Weise angesteuert wird, also im Vergleich zu den anderen Lampen entweder ein- oder ausgeschaltet oder in ihrer Helligkeit moduliert wird. Nachdem auf diese Weise die Position des Lampenbetriebsgeräts ermittelt wurde, kann eine entsprechende Betriebsadresse manuell in den Befehlsgeber 5 eingegeben werden, der diese Betriebsadresse dann an das Lampenbetriebsgerät übermittelt, welche diese Adresse in einen entsprechenden Speicher einschreibt.
c) Nachfolgend werden auch sämtliche weiteren Lampenbetriebsgeräte auf diese Weise kontaktiert und nach ihrer entsprechenden Identifizierung mit einer Betriebsadresse versehen. Die Steuereinheit 5 legt hierbei intern eine Tabelle 6 mit den vergebenen Betriebsadressen an. Ferner kann anschließend den Lampenbetriebsgeräten auch - sofern gewünscht - eine zusätzliche Gruppenadresse übermittelt werden.

Diese Vorgehensweise zur Initialisierung und erstmaligen Vergabe der Betriebsadressen für die Lampenbetriebsgeräte hat sich zwar bewährt, ist allerdings trotz allem aufwendig, da nicht abzusehen ist, welches Lampenbetriebsgerät sich als nächstes identifizieren wird. Es kann also durchaus der Fall auftreten, dass nacheinander sämtliche Räume abgesucht werden müssen, bis die sich identifizierende Leuchte ermittelt wurde. Diese aufwendige Vorgehensweise ist bei einer erstmaligen Inbetriebnahme des Systems 1 noch gerechtfertigt, zu späteren Zeitpunkten sollte allerdings sichergestellt sein, dass die Lampen dauerhaft die ihnen zugewiesenen Betriebsadressen behalten.

Hierbei ergibt sich allerdings das Problem, dass die Lampenbetriebsgeräte 10 mitunter ausgewechselt werden müssen, da sie ihre zulässige Betriebsdauer überschritten haben oder evtl. Defekte aufgetreten sind. Wird nun ein Lampenbetriebsgerät 10 ausgewechselt, so wird es durch ein neuwertiges ersetzt, welches selbstverständlich noch keine Betriebsadresse aufweist. Für den Fall, dass lediglich ein einziges Gerät ausgewechselt wurde, kann diesem auf verhältnismäßig schnelle Weise eine neue Betriebsadresse zugewiesen werden. Sollten allerdings mehr als zwei Geräte gleichzeitig ausgetauscht werden, so besteht wiederum das Problem, dass diese zunächst erst aufwendig lokalisiert und identifiziert werden müssen.

Um diese Problematik zu umgehen, wird nunmehr erfindungsgemäß vorgeschlagen, den Lampenbetriebsgeräten 10 jeweils ein Speicherteil 20 zuzuordnen, welches zur ergänzenden Speicherung der zugewiesenen Betriebsadresse genutzt wird. Wie nachfolgend erläutert wird, kann hierdurch sichergestellt werden, dass auch bei einem Austausch des zugehörigen Lampenbetriebsgeräts dieses automatisch wieder die korrekte Betriebsadresse erhält.

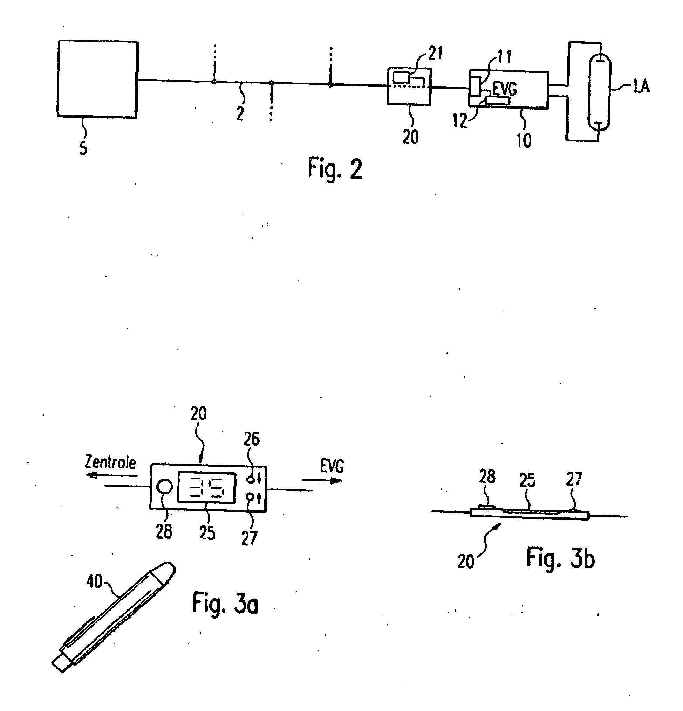

Zunächst soll anhand von Fig. 2 ein Ausschnitt des Steuerungssystems 1 gemäß Fig. 1 erläutert werden. Gezeigt ist hierbei die Verbindung von dem zentralen Befehlsgeber 5 über die Busleitung 2 zu dem Lampenbetriebsgerät 10, welches durch ein elektronisches Vorschaltgerät gebildet ist. Wie bereits erläutert wurde, weist das Lampenbetriebsgerät eine Sende- und Empfangseinheit 11 auf, über welche das Gerät mit dem Busleitungssystem 2 verbunden ist und welche für den Datenaustausch mit dem zentralen Befehlsgeber verantwortlich ist. Die von der Sende- und Empfangseinheit 11 empfangenen Steuerbefehle werden an eine - nicht dargestellte - Steuerungseinheit des Vorschaltgeräts 10 weitergeleitet, welche entsprechend diesen Befehlen die Gasentladungslampe 11 ansteuert. Voraussetzung hierbei ist, dass der entsprechende Steuerbefehl aufgrund der beigefügten Betriebs- oder Gruppenadresse an das Lampenbetriebsgerät 10 adressiert ist. Das Lampenbetriebsgerät 10 weist hierzu einen internen Speicher 12 auf, in welchem die zugewiesenen Betriebs- und Gruppenadressen gespeichert werden.

Gegenüber herkömmlichen Beleuchtungssystemen unterscheidet sich nunmehr das erfindungsgemäße System darin, dass dem Lampenbetriebsgerät 10 ein Speicherteil 20 zugeordnet ist, welches ebenfalls einen Speicher 21 aufweist. Hauptaufgabe des Speicherteils 20 ist es, ebenfalls die dem zugehörigen Lampenbetriebsgerät 10 zugewiesene Betriebsadresse zu speichern. Dieses Speicherteil 20 enthält sozusagen als Backup die Adressinformationen, welche in dem Speicher 12 des Lampenbetriebsgeräts 10 abgelegt sind. Für den regulären Betrieb des Systems wirkt sich dies nicht unmittelbar aus, da nach wie vor eine Kommunikation zwischen dem Befehlsgeber 5 und der Sende- und Empfangseinheit 11 des Lampenbetriebsgeräts 10 erfolgt, wobei das Speicherteil 20 vorzugsweise keinen Einfluss auf den Datenaustausch nimmt. Die Busleitung 2 erstreckt sich dementsprechend durch das Speicherteil 20 hindurch. Alternativ hierzu könnte allerdings das Speicherteil 20 auch aktive empfangene Daten weiterleiten.

Wird nun das Lampenbetriebsgerät 10 aufgrund von Wartungsarbeiten ausgetauscht, so ist nunmehr keine aufwendige Neuzuweisung einer Betriebsadresse mehr erforderlich. Stattdessen tritt das Speicherteil 20 mit dem neuen Betriebsgerät 10 in Kontakt und übermittelt diesem die dem vorherigen Gerät zugewiesene Betriebsadresse. Das neue Gerät kann also unmittelbar die Funktion des früheren Geräts einnehmen.

Zu beachten ist, dass in diesem ersten Ausführungsbeispiel das Speicherteil 20 nicht physisch mit dem Lampenbetriebsgerät 10 verbunden ist, sondern lediglich über die Busleitung 2. Die Kommunikation zwischen beiden Einheiten erfolgt also wiederum ausschließlich über diese Busleitung 2. Damit das Speicherteil 20 nunmehr mit dem ausgewechselten Lampenbetriebsgerät 10 kommunizieren und diesem die gespeicherte Betriebsadresse übermitteln kann, ist es wiederum zunächst erforderlich, dass das Speicherteil 20 das neue Vorlampenbetriebsgerät 10 über eine provisorische Adresse kontaktieren kann. Hierbei wird der Umstand genutzt, dass Lampenbetriebsgeräte, welche entsprechend dem DALI-Standard arbeiten, nach ihrem erstmaligen Anschluss an ein größeres Beleuchtungssystem bzw. an die Stromversorgung automatisch eine provisorische Ursprungs- oder Zufallsadresse generieren, welche nunmehr von dem dem Lampenbetriebsgerät 10 vorgeschalteten Speicherteil 20 erkannt wird. Das Speicherteil 20 speichert auch diese provisorische Adresse und nutzt diese, um in dem darauf folgenden Schritt dem Lampenbetriebsgerät 10 zu kontaktieren und die zuvor abgelegte reguläre Betriebsadresse mitzuteilen. Der Vorteil dieser Vorgehensweise besteht darin, dass der Informationsaustausch und letztendlich die Übermittlung der eigentlich Betriebsadresse ohne Zutun von Wartungspersonal erfolgt. Auch eine größere Anzahl von Lampenbetriebsgeräten kann somit innerhalb des Beleuchtungssystems 1 problemlos ausgewechselt werden und ist danach unter der gewohnten Betriebsadresse ansprechbar.

Eine weitere wesentliche Eigenschaft des Speicherteils 20 besteht darin, dass dieses leistungsarm arbeitet und ausschließlich über die Busleitung 2 des Beleuchtungssystems 1 mit Energie versorgt wird. Im Gegensatz zu dem Lampenbetriebsgerät, welches deutlich mehr Leistung aufnimmt und hierfür an ein separates - nicht dargestelltes - Stromversorungsnetz angeschlossen ist, arbeitet das Speicherteil 20 weitestgehend leistungslos bzw. leistungsarm, was zur Folge hat, dass Beschädigungen des Speicherteils 20 im Laufe der Zeit deutlich seltener auftreten. Hierdurch ist gewährleistet, dass das Speicherteil 20 auch über einen längeren Zeitraum hinweg die Betriebsadresse für das zugehörige Lampenbetriebsgerät speichert und diese auch bei einem mehrmaligen Austausch des Betriebsgeräts wieder zur Verfügung stellt. Von Vorteil ist hierbei, dass das Speicherteil lediglich während einer Kommunikation mit dem zugehörigen Lampenbetriebsgerät Energie benötigt, während des weiteren Betriebs hingegen sich passiv verhält.

Bei dem Beispiel, welches anhand der Fig. 1 und 2 beschrieben wurde, wurde der ursprüngliche Initialisierungsvorgang des Beleuchtungssystems in klassischer Weise durchgeführt. D.h., allen Lampenbetriebsgeräten 10 wurde nach ihrer entsprechenden Identifizierung von der Zentrale aus eine Betriebsadresse zugewiesen. Eine hierzu alternative Lösung ist nunmehr in den Fig. 3a und 3b dargestellt, welche allerdings wiederum auf den Gedanken beruht, ein zusätzliches Speicherteil zu verwenden.

Die Besonderheit des in den Fig. 3a und 3b dargestellten Speicherteils 20 besteht darin, dass dieses die Möglichkeit bietet, eine Betriebsadresse für das zugehörige Lampenbetriebsgerät manuell einzugeben. Hierzu weist das in den Fig. 3a und 3b dargestellte Speicherteil 20 Eingabeelemente 26 und 27 in Form von Druckknöpfen auf, welche ein schrittweises Verstellen der in einem Display 25 dargestellten Betriebsadresse ermöglichen. Mit Hilfe dieser Maßnahme ist es nun nicht mehr erforderlich, die Initialisierung und Inbetriebnahme des Beleuchtungssystems in der eingangs beschriebenen Weise durchzuführen. Stattdessen kann die Vergabe der Betriebsadressen an die gesamten Betriebsgeräte nunmehr in einfacher Weise dadurch erfolgen, dass jeweils ein entsprechendes Speicherteil manuell mit der gewünschten Betriebsadresse versehen wird und dann das Speicherteil 20 an das Busleitungssystem 2 angeschlossen wird. Der Aufwand hierbei ist deutlich geringer als bei der klassischen Initialisierungsprozedur, da es nicht mehr erforderlich ist, die sich gerade identifizierende Leuchte zu suchen, Stattdessen kann in systematischer Weise jedem Lampenbetriebsgerät eine seiner Position in dem zu beleuchtenden Gebäude entsprechende Betriebsadresse zugewiesen werden, wobei der resultierende Aufwand hierfür deutlich geringer ist. Selbstverständlich würde auch die Möglichkeit bestehen, dass Speicherteil 20 zuerst an den Bus 2 anzuschließen und dann die Betriebsadresse einzuprogrammieren.

Der Gedanke der Adressvergabe für die Lampenbetriebsgeräte durch die manuelle Programmierung eines Speicherteils ist im übrigen unabhängig davon, ob das Speicherteil 20 unmittelbar an das Lampenbetriebsgerät 16 angeschlossen ist oder mit diesem lediglich über die Busleitung verbunden ist. Eine entsprechende Programmierung wäre bspw. auch dann sinnvoll, wenn das Speicherteil zuvor oder anschließend physisch, also unmittelbar an das Lampenbetriebsgerät angeschlossen wird.

Nachdem allerdings nach wie vor gewünscht ist, dass das Speicherteil weitestgehend leistungslos arbeitet, sind nunmehr zusätzliche Maßnahmen vorgesehen, um das von dem Bussystem 2 oder dem Lampenbetriebsgerät 10 abgekoppelte Speicherteil 20 während der Programmierung der Betriebsadresse mit Energie zu versorgen. Bei dem in den Fig. 3a und 3b dargestellten Ausführungsbeispiel ist hierzu ein einfach zu handhabendes Energieversorgungselement in Form eines batteriebetriebenen Versorgungsstifts 40 vorgesehen, der mit seiner Spitze an einen entsprechenden Anschluss 28 des Speicherteils 20 angeschlossen werden kann. Sobald der Stift 40 in die entsprechende Ausnehmung des Anschluss 28 eingesetzt wurde, erfolgt induktiv eine Energieübertragung an das Speicherteil 20, welche ausreichend ist, um die Programmierung durchzuführen. Um weiterhin Energie zu sparen, kann vorgesehen sein, dass das Display 25 lediglich während des Programmiervorgangs aktiv ist.

Alternativ zu dem speziellen Anschluss 28 zur Energieversorgung könnten auch die Anschlüsse des Speicherteils 20 zum Anschluss an das Busleitungssystem 2 für die Energieversorgung genutzt werden. Innerhalb des Speicherteils 20 ist dann vorzugsweise noch eine kleine Energiespeicherschaltung in Form eines Kondensators angeordnet, welche auch im Falle eines abgeschalteten Busleitungssystems zumindest für einen vorgegebenen Zeitraum hinweg eine ausreichende Spannungsversorgung zur Speicherung der Betriebsadresse sicherstellt. Wesentlich ist allerdings, dass das Speicherteil keine Stromversorgung für das nachgestaltete Lampenbetriebsgerät darstellt.

Insgesamt bleibt dementsprechend festzuhalten, dass durch die vorliegende Erfindung eine neuartige Möglichkeit zur Adressvergabe bzw. Adressspeicherung in einem größeren Beleuchtungssystem geschaffen wird. Hierbei ist zunächst sichergestellt, dass auch nach einem Wechsel des entsprechenden Verbrauchers gewährleistet ist, dass dieser automatisch wieder die ihm zugeordnete reguläre Betriebsadresse erhält. Mit Hilfe der ergänzenden Möglichkeit der manuellen Programmierung des Speicherteils wird sogar eine völlig neuartige und elegante Möglichkeit zur Vergabe von Betriebsadressen geschaffen.

## Patentansprüche

1. Steuerungssystem (1) für mehrere verteilt angeordnete Verbraucher (10), insbesondere für Lampenbetriebsgeräte, mit
• mindestens einem Befehlsgeber (5),
• einer Steuerleitung (2), welche den Befehlsgeber (5) mit jedem Verbraucher (10) verbindet, sowie
• einer jedem Verbraucher (10) zugeordneten und zur Kommunikation mit dem Befehlsgeber (5) vorgesehenen Sende- und Empfangseinheit (11),
wobei jedem Verbraucher (10) eine Betriebsadresse zugewiesen ist, welche in einem internen Speicher (12) des Verbrauchers (10) gespeichert ist und über welche der Verbraucher (10) durch den Befehlsgeber (5) kontaktierbar ist,
und wobei jedem Verbraucher (10) ein von dem Verbraucher (10) getrenntes oder trennbares Speicherteil (20) zugeordnet ist, welches ebenfalls einen Speicher (21) zum Speichern der Betriebsadresse des zugehörigen Verbrauchers (10) aufweist, wobei das Speicherteil (20) Eingabeelemente (26, 27) zum manuellen Eingeben einer dem zugehörigen Verbraucher (10) zugewiesenen Betriebsadresse aufweist.

2. Steuerungssystem nach Anspruch 1,
**dadurch gekennzeichnet,**
**dass** das Speicherteil (20) mit dem zugehörigen Verbraucher (10) über die Steuerleitung (2) verbunden ist,
wobei vorzugsweise die Energieversorgung des Speicherteils (20) während des Betriebs des Steuerungssystems (1) über die Steuerleitung (2) erfolgt.

3. Steuerungssystem nach Anspruch 1 oder 2,
**dadurch gekennzeichnet,**
**dass** das Speicherteil (20) einen Anschluss (28) zur externen Energieversorgung während der manuellen Eingabe der Betriebsadresse aufweist.

4. Steuerungssystem nach Anspruch 3,
**dadurch gekennzeichnet,**
**dass** der Anschluss zur externen Energieversorgung durch zumindest einen Anschluss
des Speicherteils (20) an die Steuerleitung (2) des Steuerungssystems (1) gebildet ist.

5. Steuerungssystem nach Anspruch 3,
**dadurch gekennzeichnet,**
**dass** die Energieversorgung während der manuellen Eingabe der Betriebsadresse induktiv erfolgt.

6. Steuerungssystem nach einem der vorherigen Ansprüche,
**dadurch gekennzeichnet,**
**dass** das Speicherteil (20) eine Anzeige oder ein Display (25) zur Darstellung der gespeicherten Betriebsadresse aufweist,
wobei die Anzeige bzw. das Display (25) vorzugsweise lediglich während der manuellen Eingabe der Betriebsadresse aktiviert ist.

7. Steuerungssystem nach einem der vorherigen Ansprüche,
**dadurch gekennzeichnet,**
**dass** die Datenübermittlung entsprechend dem DALI-Standard erfolgt.

8. Verfahren zur Inbetriebnahme eines Steuerungssystems (1) für mehrere verteilt angeordnete Verbraucher (10), insbesondere für Lampenbetriebsgeräte, wobei im Rahmen des Verfahrens jedem Verbraucher (10) eine Betriebsadresse zugewiesen und in einem internen Speicher (12) des Verbrauchers (10) gespeichert wird, über welche der Verbraucher (10) durch den Befehlsgeber (5) kontaktierbar ist,
**dadurch gekennzeichnet,**
**dass** zur Vergabe der Betriebsadressen diese jeweils in Speicherteile (20) manuell einprogrammiert werden, welche ebenfalls einen Speicher (21) zum Speichern der Betriebsadresse des zugehörigen Verbrauchers (10) aufweisen und mit dem entsprechenden Verbraucher (10) verbunden sind bzw. nach der Eingabe der Betriebsadressen verbunden werden.

9. Verfahren nach Anspruch 8,
**dadurch gekennzeichnet,**
**dass** die Speicherteile (20) dem entsprechenden Verbraucher (10) jeweils in einem alle Verbraucher (10) verbindenden Steuerleitungssystem (2) vorgeschaltet sind.

## Claims

1. A control system (1) for a plurality of consumers (10) arranged in a distributed manner, in particular for lamp-operating devices, having
• at least one command generator (5),
• a control line (2) which connects the command generator (5) to each consumer (10), and also
• associated with each consumer (10) a transmission and reception unit (11) provided for communication with the command generator (5),
wherein there is assigned to each consumer (10) an operating address which is stored in an internal memory (12) of the consumer (10) and via which the consumer (10) can be contacted by the command generator (5),
and wherein there is associated with each consumer (10) a memory element (20), separate or separable from the consumer (10), which likewise has a memory (21) for storing the operating address of the associated consumer (10), wherein the memory element (20) has input elements (26, 27) for manually entering an operating address assigned to the associated consumer (10).

2. A control system according to claim 1,
**characterised in that**
the memory element (20) is connected to the associated consumer (10) via the control line (2),
wherein the energy supply of the memory element (20) is preferably effected during the operation of the control system (1) via the control line (2).

3. A control system according to claim 1 or 2,
**characterised in that**
the memory element (20) has a connection (28) for external energy supply during the manual input of the operating address.

4. A control system according to claim 3,
**characterised in that**
the connection for the external energy supply is formed by means of at least one connection of the memory element (20) to the control line (2) of the control system (1).

5. A control system according to claim 3,
**characterised in that**
the energy supply is effected inductively during the manual input of the operating address.

6. A control system according to any preceding claims,
**characterised in that**
the memory element (20) has an indicator or a display (25) for the representation of the stored operating address,
wherein the indicator or the display (25) is preferably activated only during the manual input of the operating address.

7. A control system according to any preceding claim,
**characterised in that**
the data-transmission is effected according to the DALI-standard.

8. Method for putting into operation a control system (1) for a plurality of consumers (10) arranged in a distributed manner, in particular for lamp-operating devices, wherein within the scope of the method there is assigned to each consumer (10) and stored in an internal memory (12) of the consumer (10) an operating address via which the consumer (10) can be contacted by the command generator (5),
**characterised in that**
for the issue of the operating addresses these are in each case programmed manually into memory elements (20) which likewise have a memory (21) for storing the operating address of the associated consumer (10) and are connected to the corresponding consumer (10) or are connected after the input of the operating addresses.

9. Method according to claim 8,
**characterised in that**
the memory elements (20) are connected to the corresponding consumer (10) in each case upstream in a control line system (2) connecting all the consumers (10).

## Revendications

1. Système de commande (1) destiné à plusieurs consommateurs (10) disposés de manière répartie, en particulier destiné à des appareils fonctionnant avec des lampes, comprenant
- au moins un module d'instructions (5),
- une ligne de commande (2), qui relie le module d'instructions (5) à chaque consommateur (10), et
- une unité d'émission et de réception (11) associée à chaque consommateur (10) et prévue pour de la communication avec le module d'instructions (5),
sachant qu'une adresse de fonctionnement est attribuée à chaque consommateur (10), adresse de fonctionnement qui est mémorisée dans une mémoire interne (12) du consommateur (10) et par l'intermédiaire de laquelle le consommateur (10) peut être contacté par le module d'instructions (5),
et sachant qu'un élément de mémoire (20) séparé ou pouvant être séparé du consommateur (10) est associé à chaque consommateur (10), lequel élément de mémoire présente de la même manière une mémoire (21) servant à mémoriser l'adresse de fonctionnement du consommateur (10) associé, sachant que l'élément de mémoire (20) présente des éléments de saisie (26, 27) servant à la saisie manuelle d'une adresse de fonctionnement attribuée au consommateur (10) associé.

2. Système de commande selon la revendication 1,
**caractérisé en ce**
**que** l'élément de mémoire (20) est relié au consommateur (10) associé par l'intermédiaire de la ligne de commande (2),
sachant que de préférence l'alimentation en énergie de l'élément de mémoire (20) se fait par l'intermédiaire de la ligne de commande (2) lors du fonctionnement du système de commande (1).

3. Système de commande selon la revendication 1 ou 2,
**caractérisé en ce**
**que** l'élément de mémoire (20) présente un raccord (28) servant à l'alimentation externe en énergie lors de la saisie manuelle de l'adresse de fonctionnement.

4. Système de commande selon la revendication 3,
**caractérisé en ce**
**que** le raccord servant à l'alimentation externe en énergie est formé par au moins un raccord de l'élément de mémoire (20) à la ligne de commande (2) du système de commande (1).

5. Système de commande selon la revendication 3,
**caractérisé en ce**
**que** l'alimentation en énergie se fait de manière inductive lors de la saisie manuelle de l'adresse de fonctionnement.

6. Système de commande selon l'une quelconque des revendications précédentes,
**caractérisé en ce**
**que** l'élément de mémoire (20) présente un système d'affichage ou un écran (25) servant à représenter l'adresse de fonctionnement mémorisée,
sachant que le système d'affichage ou l'écran (25) est activé de préférence uniquement lors de la saisie manuelle de l'adresse de fonctionnement.

7. Système de commande selon l'une quelconque des revendications précédentes,
**caractérisé en ce**
**que** le transfert de données se fait conformément au standard DALI.

8. Procédé servant à la mise en marche d'un système de commande (1) destiné à plusieurs consommateurs (10) disposés de manière répartie, en particulier destiné à des appareils fonctionnant avec des lampes, sachant que, dans le cadre dudit procédé, qu'une adresse de fonctionnement est attribuée à chaque consommateur (10) et est mémorisée dans une mémoire interne (12) du consommateur (10), adresse de fonctionnement par l'intermédiaire de laquelle le consommateur (10) peut être contacté par le module d'instructions (5),
**caractérisé en ce**
**que** lesdites adresses de fonctionnement sont respectivement programmées manuellement dans des éléments de mémoire (20) aux fins de leur affectation, lesquels éléments de mémoire présentent de la même manière une mémoire (21) servant à mémoriser l'adresse de fonctionnement du consommateur (10) associé et sont reliés au consommateur (10) correspondant ou sont reliés à ce dernier après la saisie des adresses de fonctionnement.

9. Procédé selon la revendication 8,
**caractérisé en ce**
**que** les éléments de mémoire (20) sont installés en amont du consommateur (10) correspondant respectivement dans un système de ligne de commande (2) reliant tous les consommateurs (10).
